(19) **Europäisches Patentamt European Patent Office Office européen des brevets**

(11) **EP 3 879 295 B1**

(12) **EUROPEAN PATENT SPECIFICATION**

(45) Date of publication and mention of the grant of the patent:
**25.06.2025 Bulletin 2025/26**

(21) Application number: **20162602.5**

(22) Date of filing: **12.03.2020**

(51) International Patent Classification (IPC):
**G01S 5/00** *(2006.01)* **G01S 5/02** *(2010.01)*
**G01S 19/39** *(2010.01)*

(52) Cooperative Patent Classification (CPC):
**G01S 5/0054; G01S 5/0027; G01S 5/0244; G01S 19/396**

(54) **CELLULAR POSITIONING BASED VERIFICATION OF AN ESTIMATED VEHICLE POSITION**

AUF ZELLULARER POSITIONIERUNG BASIERENDE VERIFIZIERUNG EINER GESCHÄTZTEN FAHRZEUGPOSITION

VÉRIFICATION DE POSITION ESTIMÉE D'UN VÉHICULE BASÉE SUR LE POSITIONNEMENT CELLULAIRE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**15.09.2021 Bulletin 2021/37**

(73) Proprietor: **Magna Electronics Sweden AB**
**447 37 Vårgårda (SE)**

(72) Inventors:
• **RYDSTRÖM, Mats**
  **447 37 Vårgårda (SE)**
• **ERIKSSON, Olof**
  **447 37 Vårgårda (SE)**

(74) Representative: **Westpatent AB**
**Almekärrsvägen 11**
**443 39 Lerum (SE)**

(56) References cited:
**WO-A1-2020/001821 WO-A2-2010/124011**
**US-A1- 2013 314 282**

**Description**

The present disclosure relates to positioning systems adapted for automotive applications. There are disclosed methods and devices for verifying accuracy of an estimated vehicle position.

Radar transceivers are commonly used in vehicles for monitoring vehicle surroundings. Automatic Cruise Control (ACC) functions, Emergency Braking (EB) functions, Advanced Driver Assistance Systems (ADAS) and Autonomous Drive (AD) are some examples of applications where radar data represents an important source of information on which vehicle control is based. A radar transceiver provides information about the vehicle surroundings in a relative sense, i.e., in relation to the position of the radar transceiver.

A Global Navigation Satellite System (GNSS) receiver can be used to position the vehicle in a coordinate system. This information may be useful if, e.g., it is desired to locate the vehicle with respect to other objects in a map or location register.

Cellular positioning methods are positioning methods which exploit signals in a wireless access network for positioning purposes. Cellular positioning methods have now, with the introduction of modern communication systems such as the fifth generation cellular system (5G) defined by the third generation partnership program (3GPP), become good enough to be used for automotive applications similar to those currently supported by radar systems.

The accuracy of these different positioning systems, i.e., radar, GNSS, and cellular positioning, tend to vary in dependence of the environment and positioning scenario. For instance, it is well known that GNSS-based positioning systems sometimes suffer from performance degradation in so-called urban canyon environments where there is a limited view of the sky. It is also well known that some radar systems may suffer from performance degradation if radar signal interference is strong.

WO 2020/001821 discloses an apparatus, such as user equipment (UE) in the form of a mobile device, which receives data twice, first in the form on reference data, and later in the form of verification data. The reference data can be used to determine a geographic position and the verification data can be used to verify the geographic position.

WO 2010/124011 relates to techniques for supporting positioning for terminals such as wireless phones in a wireless network. A positioning message for a terminals can be required from a mobile network, e.g., to retrieve the location of the terminal.

US 2013/314282 relates to a ground-based positioning system for determining a location of a mobile object. Position signals are emitted by fixed transmitting units which can be received by a receiving unit. The reverse case is also conceivable, where a position signal is emitted by the transmitting and/or receiving unit which is received by the fixed receiving units. A location is determined in each case and can be compared with one another for the purpose of verification.

There is a need to detect when accuracy is temporarily reduced in a vehicle positioning system.

SUMMARY

It is an object of the present disclosure to provide methods for verifying an estimated vehicle position.

This object is obtained by a method in a vehicle for verifying an estimated position of the vehicle. The method comprises establishing a wireless link to a radio base station (RBS). The method also comprises obtaining data for estimating the vehicle position and estimating the vehicle position based on the data. The method further comprises transmitting a request for position verification to the RBS and receiving a response from the RBS to the transmitted request comprising a verification position estimate based at least partly on data obtained from an uplink transmission on the wireless link to the RBS from the vehicle. The method comprises verifying the estimated position of the vehicle by comparing the estimated vehicle position to the verification position estimate.

Thus, the position estimate available at the vehicle, which may have been generated by, e.g., a GNSS system, by a radar transceiver and digital map combination, or by cellular positioning methods such as 5G positioning, can be verified using the verification position estimate generated by the RBS based on uplink transmission to the RBS. This provides a mechanism to detect when one or more positioning systems in the vehicle suffer from temporary performance degradation.

The processing resources and information available to the RBS may be larger than those available in the vehicle. Thus, the larger processing resources available at the base station can be used as a back-up in order to ensure that the vehicle positioning system does not suffer from an unexpected performance degradation. The delay constraints imposed on the positioning algorithm may also be somewhat relaxed for this verification purpose, which allows for more advanced algorithms to be used at the RBS.

According to aspects, the method comprises obtaining the data from a downlink transmission on the wireless link from the RBS to the vehicle, and estimating the vehicle position based on downlink data comprising any of an angle of arrival (AoA), an angle of departure (AoD), a time of flight (ToF), a time of arrival (TOA), and a time difference of arrival (TDOA).

The vehicle position estimate is then based at least partly on cellular positioning methods, where the input to the positioning algorithms has been extracted from the downlink transmission from the RBS to the vehicle over the wireless link established between RBS and vehicle. With the introduction of 5G networks, the accuracy of this position estimate is expected to be good enough to support a large number of automotive functions, such as Automatic Cruise Control (ACC) functions, Emergency Braking (EB) functions, Advanced Driver Assistance Systems (ADAS) and Autonomous Drive (AD). Such cellular position estimates may, however, suffer from temporarily reduced accuracy. The methods disclosed herein allow such periods of reduced accuracy to be detected.

According to aspects, the method comprises estimating the vehicle position based at least partly on data obtained from a Global Navigation Satellite System (GNSS) receiver comprised in the vehicle and/or based on radar data obtained from a radar transceiver comprised in the vehicle. This way the GNSS position fix can be verified, and unexpected performance degradation in the GNSS system can be detected.

According to aspects, the estimated vehicle position is associated with a time stamp indicating a time instant corresponding to the vehicle position estimate. The time stamp allows for interpolation between position estimates obtained at different time instants, which is an advantage since the comparison operation becomes more exact in that the compared position estimates can be aligned in time.

According to some aspects, the method comprises estimating the vehicle position by the RBS based on data obtained from an uplink transmission on the wireless link to the RBS from the vehicle. This means that the RBS performs the verification position estimation locally in, e.g., a control unit of the RBS. Delay is therefore reduced, which is an advantage.

According to other aspects, the method comprises forwarding the data obtained from the uplink transmission to a remote server, and estimating the vehicle position by the remote server. This means that the remote server bears the computational burden of estimating the verification position. The remote server may be associated with higher processing power compared to the RBS, and may therefore be able to perform more advanced positioning algorithms, such as evaluating a large number of positioning hypotheses or a large neural network trained for positioning purposes.

According to aspects, the verifying comprises comparing a difference between the estimated vehicle position and the verification position estimate to a pre-determined threshold. This is a low complexity operation, which is an advantage. The pre-determined threshold may furthermore be adapted depending on scenario and application.

According to aspects, the verifying comprises comparing a difference between a probability density function of the estimated vehicle position and a probability density function of the verification position estimate to a pre-determined threshold. This is a more advanced comparison operation, which provides more information about the differences in accuracy between the position estimate by the vehicle and the verification position estimate. This way it can be verified if the maximum error or a given error percentile associated with the estimated vehicle position seems to be correct based on the comparison.

According to aspects, the method comprises scheduling recurrent verifications of the estimated vehicle position by the RBS. Thus, recurrent verifications are performed in an orderly manner, which means that temporary performance degradations in accuracy by some of the vehicle on-board positioning system will be detected as they occur and not allowed to persist indefinitely. The recurrence frequency can be adjusted depending on application and driving scenario, which is an advantage.

The object is also obtained by a method in a radio base station (RBS) for verifying an estimated position of a vehicle. The method comprises establishing a wireless link to a communications transceiver in the vehicle, obtaining data from an uplink of the wireless link to the RBS from the vehicle for estimating the vehicle position and estimating the vehicle position based on the data. The method also comprises transmitting a request for position verification to the vehicle, receiving a response from the vehicle to the transmitted request comprising a verification position estimate generated by the vehicle, and verifying the estimated position of the vehicle by comparing the estimated vehicle position with the verification position estimate.

The RBS estimate of vehicle position is thereby verified, which is advantage. The vehicle position estimate can be obtained in various ways, as discussed above, and will normally be uncorrelated with the RBS position estimate. By means of the herein disclosed methods, the RBS can verify that the position estimation process performed at the RBS is not associated with large errors.

According to aspects, the method comprises estimating the vehicle position based on the data by executing a positioning algorithm on a remote server. The remote server may comprise higher processing power compared to the RBS, and may therefore be able to perform more advanced positioning algorithms, such as evaluating a large number of positioning hypotheses.

According to aspects, the method comprises triggering an event by the RBS in case the verifying indicates a discrepancy above a pre-determined level. The event may, e.g., be some form of emergency maneuver by the vehicle or a warning message broadcasted to other vehicles in the vicinity of the vehicle.

There are also disclosed herein control units, vehicles and radio base stations associated with the above-mentioned advantages. The vehicles, radio base stations, and control units disclosed herein are associated with the same advantages as discussed above in connection to the different methods.

Generally, all terms used in the claims are to be interpreted according to their ordinary meaning in the technical field, unless explicitly defined otherwise herein. All references to "a/an/the element, apparatus, component, means, step, etc." are to be interpreted openly as referring to at least one instance of the element, apparatus, component, means, step, etc., unless explicitly stated otherwise. The steps of any method disclosed herein do not have to be performed in the exact order disclosed, unless explicitly stated. Further features of, and advantages with, the present invention will become apparent when studying the appended claims and the following description. The skilled person realizes that different features of the present invention may be combined to create embodiments other than those described in the following, without departing from the scope of the present invention.

BRIEF DESCRIPTION OF THE DRAWINGS

The present disclosure will now be described in more detail with reference to the appended drawings, where

Figure 1 schematically illustrates a vehicle;
Figure 2 shows an example cellular positioning system;
Figure 3 illustrates a vehicle with an antenna array;
Figure 4 shows an example cellular positioning system;
Figures 5-6 are example signaling diagrams;
Figures 7A-B are flow charts illustrating methods;
Figure 8 schematically illustrates a control unit; and
Figure 9 shows an example computer program product;

DETAILED DESCRIPTION

Aspects of the present disclosure will now be described more fully with reference to the accompanying drawings. The different devices and methods disclosed herein can, however, be realized in many different forms and should not be construed as being limited to the aspects set forth herein. Like numbers in the drawings refer to like elements throughout.

The terminology used herein is for describing aspects of the disclosure only and is not intended to limit the invention. As used herein, the singular forms "a", "an" and "the" are intended to include the plural forms as well, unless the context clearly indicates otherwise.

The present disclosure relates to verification of an estimated position. A general principle of the methods disclosed herein is that a radio base station performs cellular positioning to locate a vehicle. This position estimate is then compared to a position estimate obtained locally in the vehicle, either from cellular positioning or based on some other method such as using Global Navigation Satellite System (GNSS) or radar-based positioning. If the two match, then it is considered that the position estimate(s) have been verified as accurate.

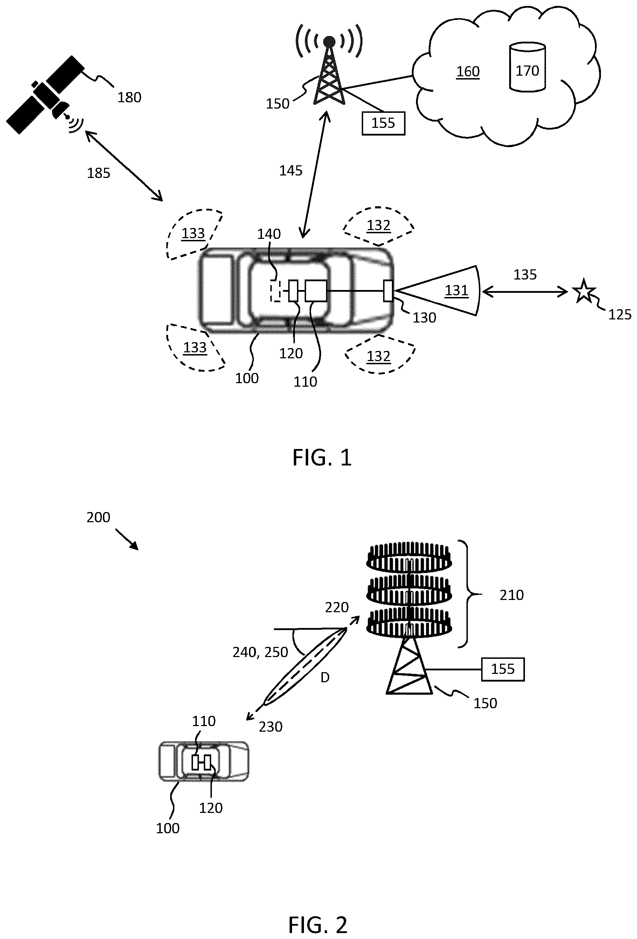

Figure 1 schematically illustrates a vehicle 100 arranged to position itself with respect to some coordinate system and also to detect relative positions of objects 125 in a vicinity of the vehicle 100.

The vehicle 100 comprises a radar system 130. The radar system is associated with at least one field of view 131, 132, 133. A front radar is associated with a field of view 131 extending in front of the vehicle, and normally to a range of about 150-200 m. The radar system 130 may optionally also comprise more short range side radars with fields of view 132 extending laterally to the sides of the vehicle 100 and also rearward looking radars associated with fields of view 133 covering areas to the rear of the vehicle. A typical range of a corner radar or rearward looking radar may be on the order of 80 meter or so.

A radar transmission 135 is reflected or scattered by a target 125, which is then detected by the radar transceiver 130. The radar transceiver 130 is connected to a central control unit 110 which controls the radar transceiver.

This control may comprise transmission timing, transmission frequency content, as well as the actual transmitted time waveform.

The vehicle 100 can use its radar transceiver 130 and control unit 110 for global positioning by matching the image seen by the radar with a database or a map of the surrounding environment. For instance, if three or more objects are detected at ranges d1, d2, and d3, which objects can be identified in a map, then the position of the vehicle in this map can be inferred by triangulation. This way a position of the vehicle 100 in a coordinate system can be obtained.

Herein, a coordinate system is a common reference system defined for at least some local area. One example of a coordinate system is the well-known World Geodetic System 1984 (WGS-84), and other examples certainly exist. Ad-hoc coordinate systems can also be defined on a need to have basis by simply defining a few anchor points at well-defined positions in the coordinate system. Coordinate systems are normally three-dimensional, but they can also be two-dimensional.

The vehicle 100 optionally comprises a GNSS receiver 140 which allows direct positioning of the vehicle 100 in a coordinate system (such as the WGS-84 system) based on received GNSS radio signals 185 from one or more satellites 180. Despite recent advances in global navigation satellite systems which enable centimeter-level accuracy, such as multi-band receivers, multi-constellation receivers, and new correction schemes, the receivers (user equipment, UE) still suffer from, i.a., a strong dependency of line-of-sight (LOS) to the satellites.

The control unit 110 is connected to a communications transceiver 120 comprised in the vehicle 100. This communications transceiver is arranged to establish a wireless communication link 145 to a radio base station (RBS) 150. Herein, an RBS is an access point providing wireless access into some communications network. One example of an RBS are the 4G eNodeB and 5G gNodeB defined by the 3GPP. The RBS 150 is part of a communication network 160 comprising one or more nodes and/or remote servers 170 to which a communication link can be established from the vehicle 100 via the RBS 150 and the communication network 160. The RBS normally comprises a control unit 155 arranged to perform various operations, such as executing computation and performing positioning. The processing power of the remote server 170 is potentially much larger than the processing power of the RBS 150. For instance, the remote server may be capable of executing signal processing algorithms based on the evaluation of multiple different hypotheses and/or the execution of artificial intelligence algorithms of substantial complexity, such as large neural network with many layers.

Positioning based on wireless access signals 145 has been known for a long time. For instance, in 2001 the United States Federal Communications Commission (FCC) started placing requirements on cellular operators to be able to locate a wireless device with accuracies on the order of 100 m. This accuracy is clearly not sufficient for automotive applications such as ADAS and AD, which have traditionally been supported by radar systems and in some cases also by vision-based systems. However, 3GPP and others have recently investigated the possibilities of using the cellular access system for high accuracy sub-meter positioning of wireless devices, such as the communications transceiver 120. 3GPP TR 22.872 V16.1.0 (2018-09) for instance, provides a study on positioning use cases. The increased positioning accuracy in, e.g., 5G cellular access systems stem from increased bandwidths, and also from the more advanced antenna systems which are deployed in 5G systems. These advanced antenna systems comprise antenna arrays, sometimes with a large number of antenna elements. Antenna elements with a large number of antenna elements are often referred to as massive multiple-input multiple-output (MIMO) antenna systems. Such antenna systems are able to estimate both angle of arrival and angle of departure och received and transmitted radio signal components, respectively.

For example, suppose $x$ denotes a position in a coordinate system, i.e., a set of coordinates. Suppose further that measurements $r = f(x) + n$ are available, where $r$ is a function of $x$ and where there is some form of noise or disturbance $n$. Both $r$ and $x$ are generally vectors.

A least squares estimator of $x$ from $r$ is

$$\hat{x} = \arg\min_x \|r - f(x)\|^2$$

A maximum likelihood estimator of $x$ from $r$ is

$$\hat{x} = \arg\max_x p(r|x)$$

where $p(r|x)$ is the likelihood of observing $r$ given $x$. Other example positioning methods certainly exist. For instance, positioning can be performed by jointly positioning scattering objects and the vehicle jointly based on measurement data from radio propagation in an environment. Algorithms for positioning relays and point scatterers were discussed by Rydström et.al. in "An Algorithm for Positioning Relays and Point Scatterers in Wireless Systems", IEEE Signal Processing Letters, 1070-9908 (ISSN), Vol. 15 s. 381-384, 2008.

Figure 2 illustrates an example 200 of a vehicle 100 which is connected to an RBS 150 comprising an advanced antenna system 210 with a plurality of antenna elements. By means of this advanced antenna arrangement, the RBS 150 is able to determine an angle of arrival (AoA) 240 of signal components 220 arriving at the RBS from the communications transceiver 120 in the vehicle 100. The RBS is also able to determine angles of departure (AoD) 250 for signal components 230 transmitted from the RBS 150 towards the vehicle 100.

Based on the AoA and/or on the AoD, and the signal delay or time of flight between RBS 150 and vehicle 100, the position of the vehicle can be determined in a known manner, e.g., based on the least squares or maximum likelihood principles discussed above. The determining of vehicle position can, e.g., be performed by the control unit in the RBS 155, or by the control unit 110 in the vehicle.

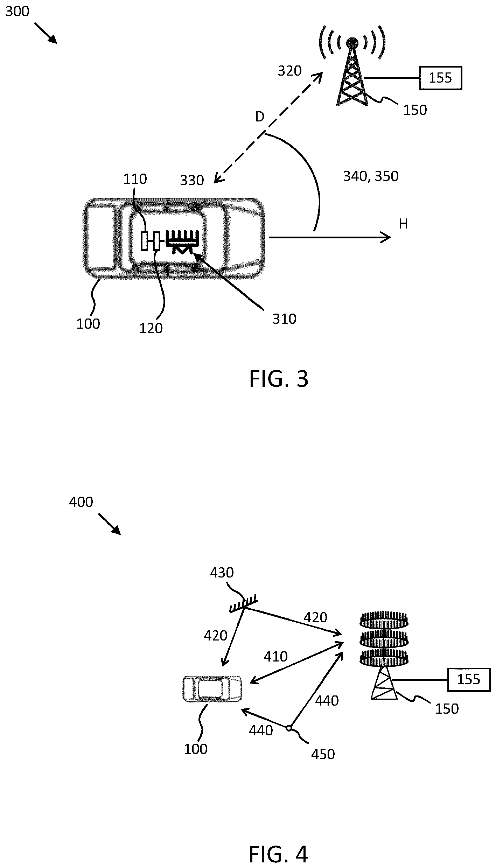

Figure 3 illustrates another example 300 of a vehicle 100 which comprises an advanced antenna array 310, such as an antenna configured for massive MIMO operation. This on-board antenna array allows for determining AoA 340 and AoD 350 for signal components on uplink 320 from the vehicle 100 to the RBS as well as on downlink 330 from the RBS 150 to the vehicle 100.

Radio signals do not always travel from transmitter to receiver over a direct line of sight (LoS) path. Figure 4 shows an example scenario 400 where the transmissions on uplink and downlink pass via a LoS path 410, and also via two indirect paths. One such signal component 420 passes via an obstacle such as a wall or other reflective surface 430. Another such signal component 440 passes via a point scatterer, such as a lamppost. The scatterer 450 may also be a relay configured to amplify and forward a radio signal.

Herein, a signal component is part of a radio signal. A signal component may, e.g., be a signal which has travelled along a given path in a multipath propagation radio channel. Different signal components may correspond to replicas of the same transmitted signal which have undergone different length paths and therefore are associated with different delays.

A radio propagation channel can be associated with an impulse response describing the different propagation paths of the radio channel. This impulse response comprises impulses at different delays and with different phases. Each such impulse gives rise to a signal component.

The scattering objects 430, 450 may be used by the system in order to improve positioning performance. In fact, this is one of the key rationales for why a 5G-based positioning system is expected to be superior to previous cellular positioning systems. Witrisal and Antón-Haro (eds) provided an overview of new positioning approaches in "Whitepaper on New Localization Methods for 5G Wireless Systems and the Internet-of-Things", COST CA15104 (IRACON); April 2018. These positioning methods mainly rely on measurements of, e.g., signal strength (which relates coarsely to travelled distance and reflections a signal has been subject to), as well as delay and angle as illustrated above in Figures 2 and 3. Delay measurements may, e.g., be time of flight (ToF), two-way time of arrival (TOA) and/or time-difference of arrival (TDOA). Some systems also make use of the Doppler shift a signal component has been subjected to, which indicates relative (often radial) velocity of the transmitter and receiver in case of a LoS path. These types of measurements are known and will therefore not be discussed in more detail herein.

A wide variety of positioning methods have been proposed for use in cellular systems. Some examples are the maximum likelihood (ML) based estimators and the Least Squares (LS) based estimators discussed above. Estimators based on Maximum a-posteriori (MAP) have also been proposed.

The accuracy of a cellular positioning system is normally dependent on the properties of the radio channel between transmitter and receiver, i.e., between the vehicle 100 and the RBS 150. Many reflections may be beneficial in some cases, and not in others. The presence of a strong LoS path may also be advantageous for some systems.

To summarize, the vehicle 100 may obtain information about its position in a given coordinate system or frame of reference in a number of different ways, such as via its communications transceiver 120 used for cellular positioning, via its radar transceiver 130 (complemented by a map or other location register), and/or via a GNSS receiver 140. All of these systems may suffer from temporary performance degradation. The cellular positioning operating via the communications transceiver 120 may be dependent on, e.g., the properties of the radio channel for providing a robust high accuracy position estimate. The radar system may suffer from reduced performance due to interference from other radar transceivers and/or from inaccuracies in the map data which is used to position the vehicle in the coordinate system based on the locally obtained radar data. The GNSS system is known to be inaccurate in urban environments where there is a limited view of the sky, and where strong multipath signal components exist. Consequently, the accuracy of the different systems change over time, and it is desired to be able to verify that a current accuracy meets requirements for a particular function.

As mentioned above, the present disclosure relates to verification of a vehicle position estimate using a cellular network. One estimate is generated in the vehicle, i.e., by the vehicle control unit 110 using one or more of the on-board vehicle positioning systems. Another, at least partly uncorrelated estimate of vehicle position is then estimated at the RBS by the RBS control unit 155 or by the remote server 170. The two estimates are then compared in order to verify that they match at least sufficiently well. A large discrepancy is indicative of problems related to the positioning accuracy.

According to a first embodiment, the vehicle 100 estimates its position in a coordinate system by, e.g., positioning itself using at least one out of radar, GNSS, and/or cellular positioning based on downlink signaling. The vehicle 100 then requests the cellular network to perform a position fix of the vehicle 100 using the signals on the uplink 220, 320 from the vehicle 100 to the RBS 150. These two position fixes are then compared in order to verify that the two match. If there is a too large discrepancy, then there is a risk that the position estimated by the vehicle 100 is associated with a large error. What constitutes a 'too large' discrepancy is normally dependent on the scenario. For instance, a threshold can be defined in dependence of driving scenario and/or application, and the difference between the position estimates (in Euclidean sense or squared error) can be compared to the threshold.

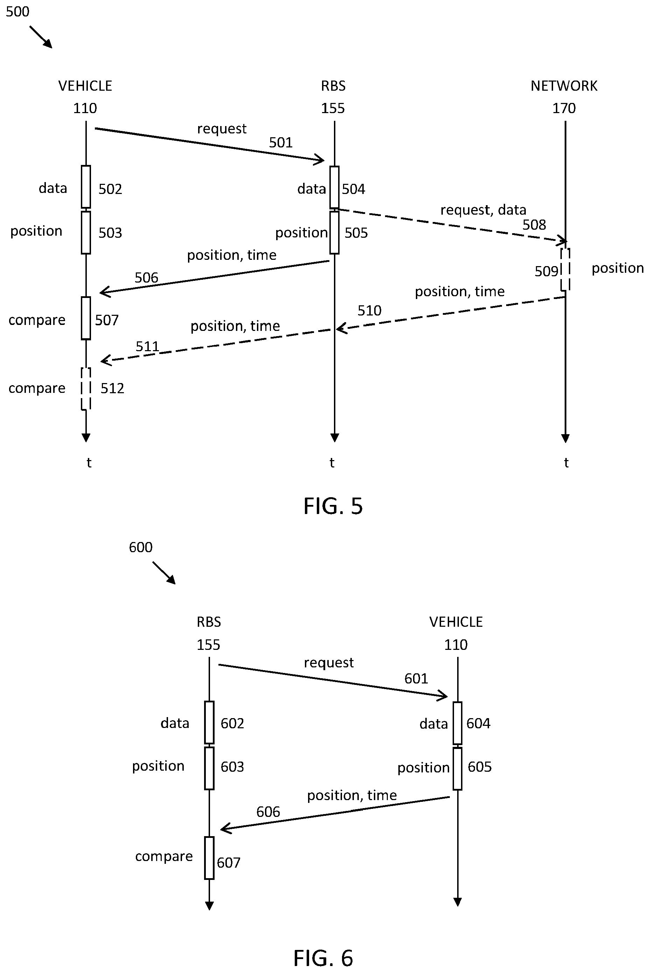

Figure 5 illustrates an example 500 of this first embodiment, where the downward arrows indicate time t, and where the blocks indicate processing of a given time duration. The processing time durations are only schematically illustrated. The vehicle control unit 110 first issues a request 501 for position verification to the RBS control unit 155. The request is transmitted over the wireless link 145 shown in Figure 1. Both the vehicle 100 and the RBS 150 then collect data 502, 504, such as signal component delays and angles, and separately estimate the position 503, 505 of the vehicle 100 based on the collected data. Thus, the position of the vehicle is estimated in two at least partially different ways. The collected data may of course also comprise data from other sources such as GNSS position data, radar data, and data from digital maps and the like. The two or more position estimates are compared 507 at the vehicle control unit 110, which may then assess if there is a discrepancy or not. A time stamp may optionally be attached to the position data in order to enable interpolation and the like.

The RBS control unit 155 may also forward 508 the data to a processing resource such as a server 170 in the communications network. The remote server 170 then bears the burden of computation 509 and delivers the result 510 as a position estimate back to the RBS control unit 155 which relays 511 the result to the vehicle control unit 110. The vehicle may then compare the two or more results 512 to see if there is a discrepancy or if the difference is within acceptable limits.

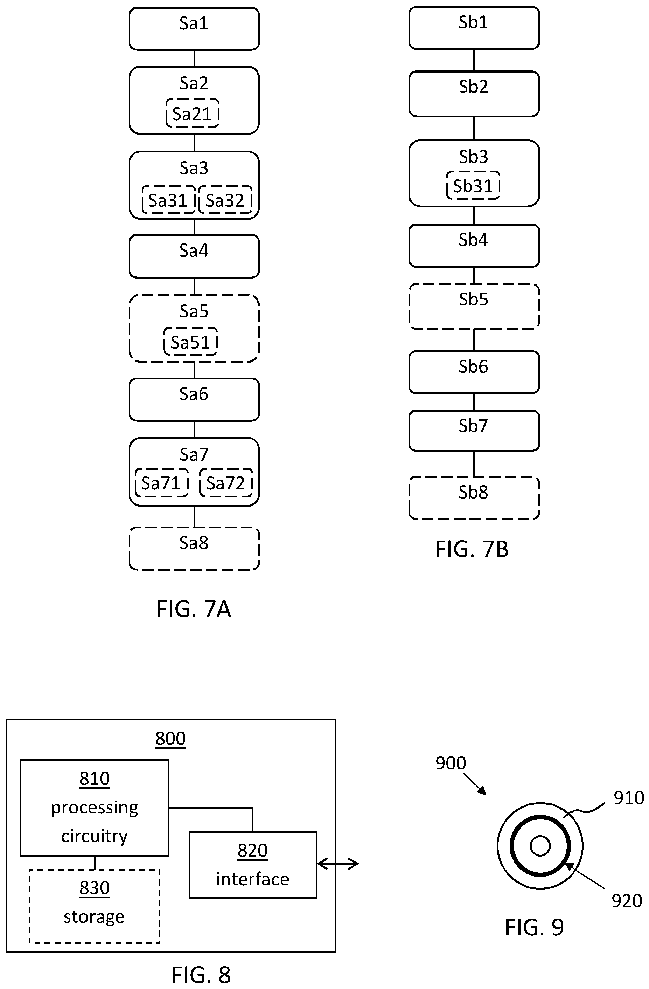

It is appreciated that the server 170 may comprise additional computing resources and may therefore execute a more advanced and computationally demanding positioning algorithm compared to the RBS control unit 155 and compared to the vehicle control unit 110. Thus, by sending measurement data to the remote server 170, additional processing power may be accessed. This increased processing power may be used to, e.g., evaluate a larger number of hypotheses, or to run large artificial intelligence architectures, such as large neural networks with many layers which may be too large to execute in the RBS control unit 155 or in the vehicle control unit 110. Figure 7A shows a flow chart which summarizes the discussions above related to the first embodiment. With reference also to Figure 5, there is illustrated a method 500 in a vehicle 100 for verifying an estimated position of the vehicle 100. The position of the vehicle 100 is estimated in a coordinate system. The estimated position may be a single coordinate, or a set of coordinates, such as a bounding box or the like. The position of the vehicle may also comprise heading, attitude, roll and yaw of the vehicle 100. The estimated position of the vehicle 100 may furthermore be a track which describes a motion of the vehicle 100 over time. The method comprises establishing Sa1 a wireless link 145 to an RBS 150. This link was discussed above in connection to, e.g., Figure 1. The link to the RBS may, e.g., be a 5G cellular system link to an RBS, or gNodeB, operating according to the specification of relevant 3GPP standards. The method also comprises obtaining Sa2 data 502 for estimating the vehicle position, and then estimating Sa3 the vehicle position 503 based on the data. This vehicle position estimation may be based on any of a radar system, a GNSS system, or a cellular positioning system. Estimating vehicle position based on downlink transmissions from an RBS to a wireless device was discussed above in connection to Figures 2-4. This estimation can be performed in a number of different ways, e.g., based on point scattering objects as discussed in connection to Figure 4.

The method also comprises transmitting Sa4 a request 501 for position verification to the RBS 150. This request is transmitted from the vehicle when the vehicle wishes to verify that its current notion of location is correct. The request may be transmitted if a large error is suspected, or regularly according to some schedule. The requests may be more frequently transmitted in more dense traffic scenarios where high 'guaranteed' accuracy is more important, such as in urban environments with dense traffic. The requests may be transmitted less frequency in sub-urban environments where larger margins to other objects in the traffic environment can be afforded by the vehicle.

The method furthermore comprises receiving Sa6 a response from the RBS 150 to the transmitted request. The response comprises a verification position estimate based at least partly on data obtained from an uplink transmission 220, 320 on the wireless link 145 to the RBS 150 from the vehicle 100. The method then performs verification Sa7 of the estimated position of the vehicle 100 by comparing 507 the estimated vehicle position to the verification position estimate. This way, the RBS 150 generates an estimate of vehicle position based on radio transmissions on the uplink of the wireless link 145. This data is likely to be different from the data obtained from the downlink transmissions, and the estimated position is therefore likely to be at least partly uncorrelated with the position estimate determined by the vehicle.

According to some aspects, the method comprises estimating Sa5 the vehicle position by the RBS based on data obtained from an uplink transmission 220, 320 on the wireless link 145 to the RBS 150 from the vehicle 100. This data may, e.g., comprise data obtained from large antenna arrays.

By comparing the two estimates of the vehicle position a verification can be performed. If the two estimates agree, then it is likely that both estimates are correct. However, if there is a discrepancy between the two, then it is likely that one or both are associated with a large error, in which case some action may be warranted. Such a discrepancy may, e.g., be used to trigger a safe stop maneuver by the vehicle, or the issuing of a warning signal to a driver using an ADAS system. This type of detected discrepancy can also be used to prevent activation of, e.g., an AD mode in a vehicle. In this case, a verification can be triggered prior to activating an AD or ADAS mode, and the performed regularly according to a pre-determined schedule as long as the AD or ADAS mode is active. In case verification fails, activation of the AD or ADAS system can be prevented.

According to some aspects, the method comprises obtaining Sa21 data from a downlink transmission 230, 330 on the wireless link 145 from the RBS 150 to the vehicle 100, and estimating the vehicle position based on downlink data comprising any of an angle of arrival (AoA), an angle of departure (AoD), a time of flight (ToF), a time of arrival (TOA), and a time difference of arrival (TDOA). This type of data was discussed above in connection to Figures 2-4. Positioning methods based on these types of data are known and will therefore not be discussed in more detail herein.

According to some aspects, the method comprises estimating Sa31 the vehicle position 503 based on data obtained from a Global Navigation Satellite System GNSS receiver comprised in the vehicle 100 and/or based on radar data obtained from a radar transceiver 130 comprised in the vehicle 100. The vehicle position estimate can be refined by means of sensor fusion techniques incorporating additional information sources such as GNSS position data and environment data obtained from a radar system of the vehicle 100.

According to some aspects, the estimated vehicle position is associated Sa32 with a time stamp indicating a time instant corresponding to the vehicle position estimate. In other words, the time stamp indicates at what time the vehicle was estimated to be located at the position. This time stamp allows the comparison routine 507, 512 to, e.g., interpolate between two or more estimated locations using motion information associated with the vehicle, and thereby align the estimated vehicle position in time with the verification position estimate. Various methods for interpolating between position estimates can be used, such as Kalman filtering and particle filtering techniques. Such techniques are known and will therefore not be discussed in more detail herein.

According to some aspects, the method also comprises forwarding Sa51 the data obtained from the uplink transmission to a remote server 170 and estimating the vehicle position by the remote server 170. This remote server may as mentioned above have more processing power compared to the RBS control unit 155. Thus, more advanced positioning algorithms may be possible to execute on the remote server 170. The execution of such more advanced algorithms may take some time, and the communication with the remote server 170 may also add some delay. However, since this is a verification operation and not a real-time control operation, such delays may be acceptable. A faster verification result can be provided by the RBS while the remote server processes the more advanced algorithm to deliver a second verification result 510, 511.

According to some aspects, the verifying comprises comparing Sa71 a difference between the estimated vehicle position and the verification position estimate to a pre-determined threshold. This is a simple verification operation, which comprises, e.g., determining a Euclidean distance or squared norm between a first vector representing the vehicle position estimate, and another vector representing the verification position estimate. The distance between the two vectors can then be compared to a threshold, and if the distance is larger than the threshold a discrepancy has been detected.

More advanced comparison methods can of course also be used. For instance, according to some aspects, the verifying comprises comparing Sa72 a difference between a probability density function of the estimated vehicle position and a probability density function of the verification position estimate to a pre-determined threshold. The distance between the two probability distributions may be quantified by, e.g., a Kullback - Leibler distance or the like. A percentile error can also be used as input to the comparison.

According to some aspects, the method also comprises scheduling Sa8 recurrent verifications of the estimated vehicle position by the RBS 150. The schedule can, as mentioned above, be adapted to the current driving scenario. For instance, if the spatial margins are small and the driving scenario is tight, such as in a busy urban intersection, the verification operations may be requested more frequently compared to a sub-urban scenario where much larger margins can be used to other road users and objects in the environment. The schedule can also be adapted based on the functions currently performed by the vehicle 100. For instance, when an AD or ADAS function is active the verification may be more frequently scheduled compared to when the AD or ADAS function is inactivated. Activation of the AD or ADAS function may be prevented if the verification fails at some point in time.

According to a second embodiment, the verification is performed the other way around, with the RBS requesting the verification from the vehicle 100. Figure 6 illustrates an example 600 of this second embodiment. The RBS control unit 155 (or the network server 170) now gathers data 602 and estimates 603 the position of the vehicle 100. The RBS control unit 155 requests 601 a position estimate from the vehicle 100 in order to verify its estimation result. The vehicle control unit 110 then collects data 604 and performs position estimation 605, which is reported 606 back to the RBS. The position estimation performed by the vehicle 100 can be based on whatever means that are available in the vehicle 100 to position itself, i.e., radar, GNSS, or communications transceiver (cellular) based positioning. The RBS control unit 155 may then compare results 607. Again, if there is a too large discrepancy, then there is a risk that at least one of the position estimates are associated with a large error.

It is appreciated that the messages may be formulated in different ways and may comprise different types of information. For instance, the response to a positioning request may comprise a position estimate in terms of coordinates, a statistical characterization of position, such as an estimated probability density function of the position, or the measurement data necessary to determine a position estimate. The responses are again preferably associated with a time stamp or other indication relating to the time at which the position of the vehicle corresponds to.

Figure 7B shows a flow chart which summarizes the discussions above related to the second embodiment. It is appreciated that the two embodiments can be freely combined, and that method steps from the two methods can be exchanged between the two methods. Figure 7B shows, with reference also to Figure 1, Figure 2, Figure 3 and Figure 6, a method 600 in a radio base station (RBS) 150 for verifying an estimated position of a vehicle 100. The method comprises establishing Sb1 a wireless link 145 to a communications transceiver 130 in the vehicle 100. The method also comprises obtaining Sb2 data 602 from an uplink 220, 320 of the wireless link 145 from the vehicle 100 to the RBS 150 for estimating the vehicle position. The method also comprises estimating Sb3 the vehicle position 603 based on the data. Thus, a first position estimate of the vehicle position is obtained at the base station, based on data from an uplink transmission on the wireless link 145. The position of the vehicle 100 is estimated in a coordinate system. The estimated position may be a single coordinate, or a set of coordinates, such as a bounding box or the like. The position of the vehicle may also comprise heading, attitude, roll and yaw of the vehicle 100. The estimated position of the vehicle 100 may furthermore be a track which describes a motion of the vehicle 100 over time.

The method also comprises transmitting Sb4 a request 601 for position verification to the vehicle 100, and receiving Sb6 a response 606 from the vehicle 100 to the transmitted request comprising a verification position estimate generated by the vehicle 100. The verification position estimate is based on data available to the vehicle control unit 110, such as GNSS and radar data. The verification position estimate may also be based on data from a downlink transmission from the RBS to the vehicle, from which data the vehicle control unit 110 can generate the verification position estimate, possibly by a different algorithm compared to that used by the RBS control unit 155. Thus, the two estimates can be expected to be at least partly uncorrelated.

Errors in the position estimates are then detected by verifying Sb7 the estimated position of the vehicle by comparing 607 the estimated vehicle position with the verification position estimate. Thus, in a manner similar to the first embodiment, errors in the position estimates can be detected by comparing the two. As long as the error is within acceptable limits there is a rather small probability of large errors. However, if the two differ by more than an acceptable amount, then action may be warranted, such as performing a safe stop maneuver or issuing a warning signal to a driver using an ADAS system. Thus, according to some aspects, the method comprises triggering Sb8 an event by the RBS in case the verifying indicates a discrepancy above a pre-determined level.

According to other aspects, the method comprises estimating Sb31 the vehicle position 603 based on the data by executing a positioning algorithm on a remote server 170. This remote server may comprise more powerful computational resources compared to the control unit 1545 at the RBS and may therefore be able to execute more advanced positioning algorithms compared to the RBS control unit 155. Thus, advantageously, once in a while an advanced algorithm such as, e.g., a multiple hypotheses tracking algorithm can be executed by the remote server 170 in order to discern if the vehicle position estimate agrees with the most likely hypotheses, or if a less likely hypotheses is being followed. The vehicle 100 may of course be notified of the result of the verification process via the wireless link 145.

As above, the method may comprise triggering Sb8 an event by the RBS in case the verifying indicates a discrepancy above a pre-determined level.

Figure 8 schematically illustrates, in terms of a number of functional units, the components of the control unit 800 according to embodiments of the present disclosure. The control unit 800 may, e.g., correspond to the vehicle control unit 110, the RBS control unit 155, or to the remote server 170. Processing circuitry 810 is provided using any combination of one or more of a suitable central processing unit (CPU), multiprocessor, microcontroller, digital signal processor (DSP), dedicated hardware accelerator, etc., capable of executing software instructions stored in a computer program product, e.g. in the form of a storage medium 830. The processing circuitry 810 may further be provided as at least one application specific integrated circuit (ASIC), or field programmable gate array (FPGA).

Particularly, the processing circuitry 810 is configured to cause the control unit 800 to perform a set of operations, or steps. These operations, or steps, were discussed above in connection to the various radar transceivers and methods. For example, the storage medium 830 may store the set of operations, and the processing circuitry 810 may be configured to retrieve the set of operations from the storage medium 830 to cause the control unit 800 to perform the set of operations. The set of operations may be provided as a set of executable instructions. Thus, the processing circuitry 810 is thereby arranged to execute methods and operations as herein disclosed.

The storage medium 830 may also comprise persistent storage, which, for example, can be any single one or combination of magnetic memory, optical memory, solid state memory or even remotely mounted memory.

The control unit 800 may further comprise a communications interface 820 for communications with at least one other unit. As such, the interface 820 may comprise one or more transmitters and receivers, comprising analogue and digital components and a suitable number of ports for wired or wireless communication.

The processing circuitry 810 is adapted to control the general operation of the control unit 800 e.g. by sending data and control signals to the external unit and the storage medium 830, by receiving data and reports from the external unit, and by retrieving data and instructions from the storage medium 830. Other components, as well as the related functionality, of the control unit 800 are omitted in order not to obscure the concepts presented herein.

Figure 9 shows a computer program product 900 comprising computer executable instructions 920 arranged on a computer readable medium 910 to execute any of the methods disclosed herein.

**Claims**

1. A method (500) in a vehicle (100) for verifying an estimated position of the vehicle (100), the method comprising

establishing (Sa1) a wireless link (145) to a radio base station, RBS, 150,
obtaining (Sa2) data (502) for estimating the vehicle position,
estimating (Sa3) the vehicle position (503) based on the data, and
transmitting (Sa4) a request (501) for position verification to the RBS (150),
**characterized in that** the method further comprises
receiving (Sa6) a response from the RBS (150) to the transmitted request comprising a verification position estimate based at least partly on data obtained from an uplink transmission (220, 320) on the wireless link (145) to the RBS (150) from the vehicle (100) and being at least partly uncorrelated with the estimated vehicle position, and

verifying (Sa7) the estimated position of the vehicle (100) by comparing (507) the estimated vehicle position to the verification position estimate.

2. The method according to claim 1, comprising obtaining (Sa21) the data from a downlink transmission (230, 330) on the wireless link (145) from the RBS (150) to the vehicle (100), and estimating the vehicle position based on downlink data comprising any of an angle of arrival, AoA, an angle of departure, AoD, a time of flight, ToF, a time of arrival TOA, and a time difference of arrival, TDOA.

3. The method according to any previous claim, comprising estimating (Sa31) the vehicle position (503) based at least partly on data obtained from a Global Navigation Satellite System, GNSS, receiver comprised in the vehicle (100) and/or based on radar data obtained from a radar transceiver (130) comprised in the vehicle (100).

4. The method according to any previous claim, wherein the estimated vehicle position is associated (Sa32) with a time stamp indicating a time instant corresponding to the vehicle position estimate.

5. The method according to any previous claim, comprising estimating (Sa5) the vehicle position by the RBS based on data obtained from an uplink transmission (220, 320) on the wireless link (145) to the RBS (150) from the vehicle (100).

6. The method according to claim 5, comprising forwarding (Sa51) the data obtained from the uplink transmission to a remote server (170), and estimating the vehicle position by the remote server (170).

7. The method according to any previous claim, wherein the verifying comprises comparing (Sa71) a difference between the estimated vehicle position and the verification position estimate to a pre-determined threshold.

8. The method according to any previous claim, wherein the verifying comprises comparing (Sa72) a difference between a probability density function of the estimated vehicle position and a probability density function of the verification position estimate to a pre-determined threshold.

9. The method according to any previous claim, comprising scheduling (Sa8) recurrent verifications of the estimated vehicle position by the RBS (150).

10. A vehicle control unit (110, 800) comprising processing circuitry (810) configured to perform any of the methods according to claims 1-9.

11. A vehicle (100) comprising the vehicle control unit (110, 800) according to claim 10.

12. A method (600) in a radio base station, RBS, (150) for verifying an estimated position of a vehicle (100), the method comprising

establishing (Sb1) a wireless link (145) to a communications transceiver (130) in the vehicle (100),
obtaining (Sb2) data (602) from an uplink (220, 320) of the wireless link (145) to the RBS (150) from the vehicle (100) for estimating the vehicle position,
estimating (Sb3) the vehicle position (603) based on the data, and
transmitting (Sb4) a request (601) for position verification to the vehicle (100),
**characterized in that** the method further comprises
receiving (Sb6) a response (606) from the vehicle (100) to the transmitted request comprising a verification position estimate generated by the vehicle (100) and being at least partly uncorrelated with the estimated vehicle position, and
verifying (Sb7) the estimated position of the vehicle by comparing (607) the estimated vehicle position with the verification position estimate.

13. The method according to claim 12, comprising estimating (Sb31) the vehicle position (603) based on the data by executing a positioning algorithm on a remote server (170).

14. The method according to any of claims 12 or 13, comprising triggering (Sb8) an event by the RBS in case the verifying indicates a discrepancy above a pre-determined level.

15. A radio base station, RBS, control unit (155, 800) comprising processing circuitry (810) configured to perform any of the methods according to claims 12-14.

**Patentansprüche**

1. Verfahren (500) in einem Fahrzeug (100) zum Überprüfen einer geschätzten Position des Fahrzeugs (100), das Verfahren umfassend

Herstellen (Sa1) einer drahtlosen Verbindung (145) zu einer Funkbasisstation, RBS, 150,
Erhalten (Sa2) von Daten (502) zum Schätzen der Fahrzeugposition,

Schätzen (Sa3) der Fahrzeugposition (503) basierend auf den Daten und

Übertragen (Sa4) einer Anfrage (501) für eine Positionsüberprüfung an die RBS (150), **dadurch gekennzeichnet, dass** das Verfahren ferner umfasst

Empfangen (Sa6) einer Antwort von der RBS (150) auf die übertragene Anfrage, umfassend eine Überprüfungspositionsschätzung, die mindestens teilweise auf Daten basiert, die von einer Uplink-Übertragung (220, 320) auf der drahtlosen Verbindung (145) zu der RBS (150) von dem Fahrzeug (100) erhalten werden und mindestens teilweise nicht mit der geschätzten Fahrzeugposition korrelieren und

Überprüfen (Sa7) der geschätzten Position des Fahrzeugs (100) durch ein Vergleichen (507) der geschätzten Fahrzeugposition mit der Überprüfungspositionsschätzung.

2. Verfahren nach Anspruch 1, umfassend das Erhalten (Sa21) der Daten von einer Downlink-Übertragung (230, 330) auf der drahtlosen Verbindung (145) von der RBS (150) zu dem Fahrzeug (100) und das Schätzen der Fahrzeugposition basierend auf Downlink-Daten, umfassend einen beliebigen eines Ankunftswinkels, AoA, eines Abfahrwinkels, AoD, einer Fahrzeit, ToF, einer Ankunftszeit, TOA, und einer Ankunftszeitdifferenz, TDOA.

3. Verfahren nach einem der vorstehenden Ansprüche, umfassend das Schätzen (Sa31) der Fahrzeugposition (503) mindestens teilweise basierend auf Daten, die von einem Empfänger eines globalen Navigationssatellitensystems, GNSS, erhalten werden, das in dem Fahrzeug (100) enthalten ist, und/oder basierend auf Radardaten, die von einem Radar-Transceiver (130) erhalten werden, der in dem Fahrzeug (100) enthalten ist.

4. Verfahren nach einem der vorstehenden Ansprüche, wobei die geschätzte Fahrzeugposition mit einem Zeitstempel verknüpft (Sa32) ist, der einen Zeitpunkt angibt, der der Fahrzeugpositionsschätzung entspricht.

5. Verfahren nach einem der vorstehenden Ansprüche, umfassend das Schätzen (Sa5) der Fahrzeugposition durch die RBS basierend auf Daten, die von einer Uplink-Übertragung (220, 320) auf der drahtlosen Verbindung (145) zu der RBS (150) von dem Fahrzeug (100) erhalten werden.

6. Verfahren nach Anspruch 5, umfassend ein Weiterleiten (Sa51) der Daten, die von der Uplink-Übertragung erhalten werden, an einen Remote-Server (170) und das Schätzen der Fahrzeugposition durch den Remote-Server (170).

7. Verfahren nach einem der vorstehenden Ansprüche, wobei das Überprüfen das Vergleichen (Sa71) einer Differenz zwischen der geschätzten Fahrzeugposition und der Überprüfungspositionsschätzung mit einem zuvor bestimmten Schwellenwert umfasst.

8. Verfahren nach einem der vorstehenden Ansprüche, wobei das Überprüfen das Vergleichen (Sa72) einer Differenz zwischen einer Wahrscheinlichkeitsdichtefunktion der geschätzten Fahrzeugposition und einer Wahrscheinlichkeitsdichtefunktion der Überprüfungspositionsschätzung mit einem zuvor bestimmten Schwellenwert umfasst.

9. Verfahren nach einem der vorstehenden Ansprüche, umfassend ein Planen (Sa8) wiederkehrender Überprüfungen der geschätzten Fahrzeugposition durch die RBS (150).

10. Fahrzeugsteuereinheit (110, 800), umfassend eine Verarbeitungsschaltung (810), die konfiguriert ist, um ein beliebiges der Verfahren nach den Ansprüchen 1 bis 9 durchzuführen.

11. Fahrzeug (100), umfassend die Fahrzeugsteuereinheit (110, 800) nach Anspruch 10.

12. Verfahren (600) in einer Funkbasisstation, RBS, (150) zum Überprüfen einer geschätzten Position eines Fahrzeugs (100), das Verfahren umfassend

Herstellen (Sb1) einer drahtlosen Verbindung (145) zu einem Kommunikations-Transceiver (130) in dem Fahrzeug (100),

Erhalten (Sb2) von Daten (602) von einem Uplink (220, 320) der drahtlosen Verbindung (145) zu der RBS (150) von dem Fahrzeug (100) zum Schätzen der Fahrzeugposition,

Schätzen (Sb3) der Fahrzeugposition (603) basierend auf den Daten und

Übertragen (Sb4) einer Anfrage (601) für eine Positionsüberprüfung an das Fahrzeug (100), **dadurch gekennzeichnet, dass** das Verfahren ferner umfasst

Empfangen (Sb6) einer Antwort (606) von dem Fahrzeug (100) auf die übertragene Anfrage, umfassend eine Positionsüberprüfungsschätzung, die durch das Fahrzeug (100) erzeugt wird, die mindestens teilweise nicht mit der geschätzten Fahrzeugposition korreliert und

Überprüfen (Sb7) der geschätzten Position des Fahrzeugs durch das Vergleichen (607) der geschätzten Fahrzeugposition mit der Überprüfungspositionsschätzung.

13. Verfahren nach Anspruch 12, umfassend das Schätzen (Sb31) der Fahrzeugposition (603) basierend auf den Daten durch ein Ausführen eines Positionierungsalgorithmus auf einem Remote-Server (170).

14. Verfahren nach einem der Ansprüche 12 oder 13, umfassend ein Auslösen (Sb8) eines Ereignisses durch die RBS, falls das Überprüfen eine Diskrepanz über einem zuvor bestimmten Niveau angibt.

15. Steuereinheit (155, 800) einer Funkbasisstation, RBS, umfassend eine Verarbeitungsschaltung (810), die konfiguriert ist, um ein beliebiges der Verfahren nach den Ansprüchen 12 bis 14 durchzuführen.

**Revendications**

1. Procédé (500) dans un véhicule (100) permettant de vérifier une position estimée du véhicule (100), le procédé comprenant

> l'établissement (Sa1) d'une liaison sans fil (145) vers une station fixe radio (RBS) (150),
> l'obtention (Sa2) de données (502) destinées à estimer la position de véhicule,
> l'estimation (Sa3) de la position de véhicule (503) sur la base des données, et
> la transmission (Sa4) d'une requête (501) pour une vérification de position à la RBS (150),
> **caractérisé en ce que** le procédé comprend en outre
> la réception (Sa6) d'une réponse à partir de la RBS (150) à la requête transmise comprenant une estimation de position de vérification sur la base au moins en partie de données obtenues à partir d'une transmission sens montant (220, 320) sur la liaison sans fil (145) vers la RBS (150) à partir du véhicule (100) et qui est au moins partiellement non corrélée avec la position de véhicule estimée, et
> la vérification (Sa7) de la position estimée du véhicule (100) en comparant (507) la position de véhicule estimée avec l'estimation de position de vérification.

2. Procédé selon la revendication 1, comprenant l'obtention (Sa21) des données à partir d'une transmission sens descendant (230, 330) sur la liaison sans fil (145) à partir de la RBS (150) vers le véhicule (100), et l'estimation de la position de véhicule sur la base de données de liaison descendante comprenant l'un quelconque parmi un angle d'arrivée, AoA, un angle de départ, AoD, un temps de vol, ToF, un temps de retour TOA, et une différence entre les temps d'arrivée, TDOA.

3. Procédé selon l'une quelconque revendication précédente, comprenant l'estimation (Sa31) de la position de véhicule (503) sur la base au moins en partie de données obtenues à partir d'un récepteur de Système mondial de navigation par satellite, GNSS, compris dans le véhicule (100) et/ou sur la base de données radar obtenues à partir d'un émetteur-récepteur radar (130) compris dans le véhicule (100).

4. Procédé selon l'une quelconque revendication précédente, dans lequel la position de véhicule estimée est associée (Sa32) à une marque d'horodatage indiquant un temps instantané correspondant à l'estimation de position de véhicule.

5. Procédé selon l'une quelconque revendication précédente, comprenant l'estimation (Sa5) de la position de véhicule par la RBS sur la base de données obtenues à partir d'une transmission sens montant (220, 320) sur la liaison sans fil (145) vers la RBS (150) à partir du véhicule (100).

6. Procédé selon la revendication 5, comprenant la transmission (Sa51) des données obtenues à partir de la transmission sens montant à un serveur à distance (170), et l'estimation de la position de véhicule par le serveur à distance (170).

7. Procédé selon l'une quelconque revendication précédente, dans lequel la vérification comprend la comparaison (Sa71) d'une différence entre la position de véhicule estimée et l'estimation de position de vérification avec un seuil prédéterminé.

8. Procédé selon l'une quelconque revendication précédente, dans lequel la vérification comprend la comparaison (Sa72) d'une différence entre une densité de probabilité de la position de véhicule estimée et une densité de probabilité de l'estimation de position de vérification avec un seuil prédéterminé.

9. Procédé selon l'une quelconque revendication précédente, comprenant la programmation (Sa8) de vérifications récurrentes de la position de véhicule estimée par la RBS (150).

10. Unité de commande de véhicule (110, 800) comprenant une circuiterie de traitement (810) configuré pour exécuter l'un quelconque des procédés selon les revendications 1 à 9.

11. Véhicule (100) comprenant une unité de commande de véhicule (110, 800) selon la revendication 10.

12. Procédé (600) dans une station fixe radio (RBS) (150) permettant de vérifier une position estimée d'un véhicule (100), le procédé comprenant

> l'établissement (Sb1) d'une liaison sans fil (145) vers un émetteur-récepteur de communications (130) dans le véhicule (100),

l'obtention (Sb2) de données (602) à partir d'une liaison montante (220, 320) de la liaison sans fil (145) vers la RBS (150) à partir du véhicule (100) destinées à estimer la position de véhicule,

l'estimation (Sb3) de la position de véhicule (603) sur la base des données, et

la transmission (Sb4) d'une requête (601) pour une vérification de position au véhicule (100), **caractérisé en ce que** le procédé comprend en outre

la réception (Sb6) d'une réponse (606) à partir du véhicule (100) à la requête transmise comprenant une estimation de position de vérification générée par le véhicule (100) et qui est au moins partiellement non corrélée avec la position de véhicule estimée, et

la vérification (Sb7) de la position estimée du véhicule en comparant (607) la position de véhicule estimée avec l'estimation de position de vérification.

13. Procédé selon la revendication 12, comprenant l'estimation (Sb31) de la position de véhicule (603) sur la base des données en exécutant un algorithme de positionnement sur un serveur à distance (170).

14. Procédé selon l'une quelconque des revendications 12 ou 13, comprenant le déclenchement (Sb8) d'un événement par la RBS dans le cas où la vérification indique un écart supérieur à un niveau prédéterminé.

15. Unité de commande de station fixe radio (RBS) (155, 800) comprenant une circuiterie de traitement (810) configuré pour exécuter l'un quelconque des procédés selon les revendications 12 à 14.

FIG. 1

FIG. 2

FIG. 3

FIG. 4

500

VEHICLE
110

RBS
155

NETWORK
170

request
501

data | 502

data | 504

position | 503

position | 505

request, data
508

position, time
506

509 position

compare | 507

position, time
510

position, time
511

compare | 512

t

t

t

FIG. 5

600

RBS
155

VEHICLE
110

request
601

data | 602

data | 604

position | 603

position | 605

position, time
606

compare | 607

FIG. 6

FIG. 7A

FIG. 7B

FIG. 8

FIG. 9

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- WO 2020001821 A
- WO 2010124011 A
- US 2013314282 A

### Non-patent literature cited in the description

- **RYDSTRÖM**. An Algorithm for Positioning Relays and Point Scatterers in Wireless Systems. *IEEE Signal Processing Letters*, 2008, vol. 15, ISSN 1070-9908, 381-384
- Whitepaper on New Localization Methods for 5G Wireless Systems and the Internet-of-Things. COST CA15104 (IRACON). April 2018